# EUROPEAN PATENT APPLICATION

(11) **EP 3 125 473 A1**
(43) Date of publication of application: **01.02.2017**
(21) Application number: 15382387.7
(22) Date of filing: 27.07.2015
(51) Int. Cl.: H04L 12/58

(54) **METHOD, SYSTEM AND COMPUTER PROGRAM PRODUCTS FOR MESSAGING DELIVERING**

(71) Applicant: Telefonica Digital España, S.L.U., 28013 Madrid (ES)
(72) Inventor: Neystadt, John Eugene, 44471 Kfar-Saba (IL); Velasco Benito, Mr. Daniel, 28013 Madrid (ES); Hoffman, Doron, 28013 Madrid (ES)
(74) Representative: Carlos Hernando, Borja

(57) **Abstract**

The method comprising: sending by a first user (100) a communication message to a second user (200); requesting, by a messaging delivery service (300) to a network register server (302), which messaging computing applications (201, 202, 203) the second user (200) has registered; recording the communication message into a communication register server (303); and for each of said registered messaging computing applications (201, 202, 203) attempting to deliver the communication message and updating a delivery status of the communication message in the communication register server (303), wherein upon the second user (200) having attached to the communication network via one of the registered computing applications (201, 202, 203), the messaging delivery service (300) further retrieves the communication message from the communication register server (303), and re-attempts to deliver the communication message to said registered messaging computing application having attached to the communication network.

## Description

### Field of the art

The present invention is directed, in general, to messaging delivering. In particular, the invention relates to a method, a system, and computer programs products for messaging delivering merging two different mechanisms, a store and forward mechanism and a cloud communication mechanism, enabling to keep a single copy of the communication message to be delivered, therefore reducing storage needs, technical complexity, and associated operational costs.

### Background of the invention

In messaging services, such as short message (SMS) or Instant Messaging (IM), message delivery (via SIP, SMPP, etc.) is done via an access gateway. When a messaging computing application to which a communication message is targeted is not reachable, a messaging delivery service (which can be a short message service center (SMSC) in case of SMS or an SIP application server for IMS) needs to store the communication message and wait for said computing application to come online to retry the delivery of the communication message. This store and forward mechanism is expensive operationally, since for large scale messaging service, millions of communication messages need to be stored and retried. Multiple challenges exist in terms of storage space, recovery from avalanches, when many messaging computing applications become online at the same time, after downtime, handling communication message loops, and group messaging expansion.

Current solutions are using store and forward mechanisms, which are typically implemented inside the messaging delivery service (e.g. SMSC), which handles all this challenges. When the messaging computing application attaches to the network, a network register server (such as HSS in IMS or HLR in 3G) signals the messaging delivery service, which retries communication message delivery to the messaging computing application. SMSC represents complex system with multiple servers and large operational costs

EP-B1-1246481 patent discloses one of those store and forward mechanisms for short messages. The store and forward mechanism of this EP patent is characterized in that the SMSC comprises means for storage and recognition of previously stored "special" mobile destination terminals, and in that independent means have also been foreseen for receiving SMS messages, which in turn comprise means for storage of a univocal identification equivalent to a VLR and an IMSI of each of the independent means of SMS reception. In this patent, when a Network Signaling Transfer Point (STP) identifies that the SMS message is addressed to one of the "special" mobile terminals, said STP requests the data on the destination mobile terminal from the independent means of SMS reception, which also comprises at least one processing module for forwarding its VLR and IMSI, as if it concerned an HLR, to the SMSC, so that the latter forward it the SMS message as if it were the VLR of the destination mobile terminal, so that the SMS message is stored in the independent means of SMS reception.

Apart from that, modern messaging services, such as Facebook Messenger®, or TU Go®, create a cloud communication archive, which keeps track of all communication messages sent and received by a user, allowing him/her to synchronize communication messaging timeline across multiple messaging computing applications, or access communication archive from a web client, which does not store messaging history locally on the messaging computing application.

Currently the offering of a cloud communication archive over store & forward messaging services, such as SMS, requires a duplicated network storage function, one for the store & forward capability and a second one for the persistent archive of messages.

### Description of the Invention

Embodiments of the present invention provide according to a first aspect a method for messaging delivering, the method comprising: sending, by a first user via a computing device, at least one communication message to a second user via a messaging delivery service of a communication network; requesting, by the messaging delivery service to a network register server, which messaging computing applications the second user has registered on the network register server; recording, by the messaging delivery service, the communication message into a communication register server; and for each of said registered messaging computing applications attempting to deliver, by the messaging delivery service, via an access gateway, the communication message, and updating a delivery status of the communication message in the communication register server, the delivery status indicating either a successful delivery or a failed delivery of the communication message in the registered messaging computing application.

Preferably, the communication message is recorded into the communication register server with a first identifier that identifies the communication message for each registered messaging computing application. Moreover, each registered messaging computing application is also identified in the communication register server by means of a second identifier. Hence, when the messaging delivery service attempts the delivery of the communication message to said registered messaging computing applications it does so by including both of said identifiers.

According to present invention, the registered messaging computing applications may comprise or not computing capabilities supporting a local copy of delivered communication messages. A messaging computing application that supports a local copy of the messages may be for instance a native smartphone application. On the other hand messaging computing applications that do not support a local copy of the messages can access to the messages on request, including old as well as new undelivered messages. An example of this kind of messaging computing applications is a web application (e.g. messaging service's web page) accessed via a web browser.

Therefore, in the proposed method, according to an embodiment, when the second user attaches to the communication network via a registered messaging computing application comprising computing capabilities supporting a local copy of delivered messages, the messaging delivery service, retrieves from the communication register server the communication message having a failed delivery status and re-attempts to deliver the communication message to said registered messaging computing application. Moreover, the messaging delivery service updates the delivery status of the communication message in the communication register server for said particular registered messaging computing application.

Alternatively, when the second user attaches to the communication network via a registered messaging computing application without computing capabilities supporting a local copy of delivered messages, the messaging delivery service retrieves from the communication register server, upon said registered messaging computing application having requested said retrieval, at least the communication message having a failed delivery status, and delivers the requested communication message to the registered messaging computing application for its presentation to the second user on said registered messaging computing application.

The messaging delivery service allows maintaining a cloud communication history when said communication message (and all the communication messages directed to the second user) is recorded, enabling the second user to see its entire communications timeline performed from any of its messaging computing applications. In addition, the messaging delivery service eliminates the need of the store and forward mechanism known in the prior art by:
- Reassembling communication message fragments from communication register server when applicable.
- Keeping communication message delivery status in the communication register server.
- Receiving a trigger, when the registered messaging computing applications of the second user attaches to the network, e.g. from a network register server such as HLR / HSS or from an Access Proxy, such as SIP Proxy.
- Extracting recorded communication messages from communication register server, with delivery status=undelivered
- Fragmenting communication messages for suitable delivery (optionally).
- Retrying delivery in a special mode (without producing a new entry in the communication timeline)
   o Fragmenting the communication message to 140 characters and create right message encapsulation (MSRP/3GPP, whatever is needed); and
   o Updating communication message delivery status to delivered, upon success.

According to present invention, the communication message may be a short message (SMS), an Instant Messaging (IM), or any other suitable messaging service.

In one embodiment, the communication message is sent by the first user in one piece. Alternatively, in another embodiment, the communication message is sent fragmented into several portions.

Moreover, the messaging delivery service may also send the communication message either in one piece or fragmented into several portions.

In one embodiment, the messaging delivery service limits the time over which it will retry the delivery of the communication message to a configurable time interval.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more deeply understood from the following detailed description of embodiments, with reference to the attached drawings, which must be considered in an illustrative and non-limiting manner, in which:
Fig. 1 is an illustration of the present invention general architecture for messaging delivering.
Fig. 2 is a flow chart illustrating all the steps that may be performed by the proposed method for messaging delivering.

### Detailed Description of the Invention and of Several Embodiments

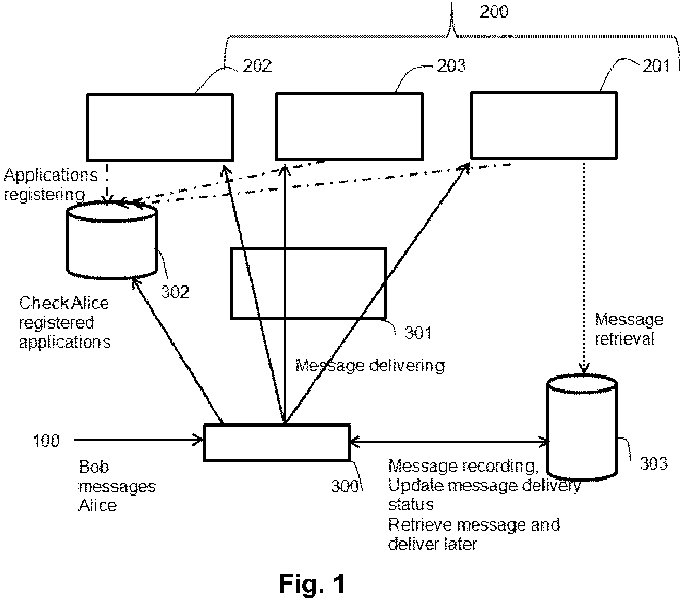

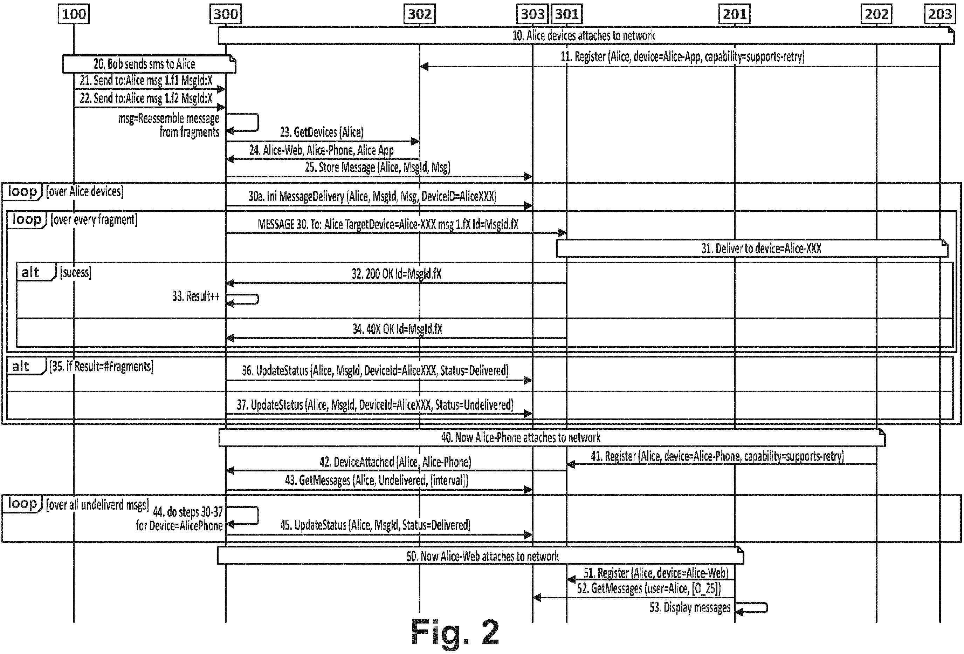

As may be seen in Fig. 1 and 2, the proposed method for messaging delivering starts with the second user 200 (also termed Alice) attaching to the network (10) by way of one of its messaging computing applications 201, 202, 203. In this particular case, the second user 200 may attach the network with three different messaging computing applications, in particular a web based messaging application 201 running on a web browser of a computing device, a Short Message Service (SMS) application 202 running on a mobile computing device (e.g. the device's native SMS application) and a software messaging communication application 203 running in said mobile computing device (or in another mobile computing device) (e.g. an application prepared to receive a copy of the SMS sent to the user either Over-the-Top or through standard SMS over IP procedures).

The attaching to the network may be done by sending (11) a REGISTER SIP request or a similar signaling request over legacy network. In addition, the second user 200 may also indicate, whether the attached messaging computing application supports retried delivery (such as IP-SMS) or not (such as the case of a web client with no local communication history).

Then a first user 100 (also termed Bob) sends a communication message, such as a SMS, to the second user (20) via a messaging delivery service 300. The communication message can be sent as a whole, or optionally fragmented into multiple parts (21, 22), if the underlying system imposes size limit (such as SMS of 140 bytes). If the communication message is fragmented, messaging delivery service 300 then reassembles (23) the communication message.

At that time, messaging delivery service 300 requests network register server 302, such as HSS or HLR, to check what messaging computing applications 201, 202, 203 the second user 200 has associated with her account. Access Layer of the network register server 302 can reply (24) for example, that the second user 200 has three messaging computing applications, and include their messaging computing applications identifiers (or second identifiers).

Then the messaging delivery service 300 records (25) the communication message into a communication register server 303 (e.g. a cloud server) identifying, preferably, the communication message by a message identifier (MsgID or first identifier) for a given messaging computing application identifier. Then, the messaging delivery service 300 iterates over the list of said messaging computing applications 201, 202, 203, and for each messaging computing application 201, 202, 203 attempts to deliver (30 / 31), via an access gateway 301, the communication message (or each fragmented portion), including, preferably, both of said identifiers, first and second. In some embodiments, as illustrated in Fig. 2, the messaging delivery service 300 also informs (30a) the communication register server 303 whenever it starts the delivery of one of the stored messages to a specific messaging computing application. The access gateway 301 will report delivery attempt result (32 / 34) to messaging delivery service 300. If for each fragment a successful result is received (32) the messaging delivery service 300 will note it (33). If a failed result is received (34) it means communication message was not fully successful.

When all fragments were attempted to be delivered to all of said messaging computing applications 201, 202, 203 or after a configured timeout, messaging delivery service 300 checks the result (35). If all fragments were successfully delivered the messaging delivery service 300 updates (36) said communication register server 303, marking communication message delivery status successful/delivered. Otherwise it specifies communication message delivery status as undelivered (37).

According to present invention, the registered messaging computing applications may comprise computing capabilities supporting a local copy of delivered messages (such as said SMS application 202 or said software messaging communication application 203) or not (such as said web based messaging application 201).

Message delivery to offline communication applications 202, 203 that keep local copy of delivered communication messages

For this type of communication applications, when for instance communication application 202 attaches to the network (40) and registers (41) to the network register server 302, the network register server 302 notices the retry capability as indicated in the register request, and sends a DeviceAttached (42) event to the messaging delivery service 300. The messaging delivery service 300 then queries (43) the communication register server 303 for all the second user communication messages having a delivery status=undelivered. In addition, the messaging delivery service 300 can optionally limit the time over which it will retry delivery to a configurable time interval to reduce delivery overhead and costs.

Then messaging delivery service 300 loops over all retrieved communication messages and re-attempts to deliver the communication message to said communication application 202 having previously attached to the network. Optionally, the messaging delivery service 300 may fragment (44) the communication message into several portions of a given size as mandated by the transport protocol and repeats steps 30-37 for this communication message, targeting said specific communication application 202. If the communication message (or all its fragments) are reported to be successfully delivered by the access gateway 201, the messaging delivery service 300 updates (46) the communication message delivery status in the communication register server 303 to a delivery status=delivered for that specific communication application 202, according to its first identifier.

It has to be noted that communication applications 202 may receive same fragment or communication message multiple times, therefore said communication application 202 must has to discard duplicate communication messages if a communication message with same first identifier is already received.

Message delivery to offline communication applications 201 that can't keep local copy of delivered communication messages

For this type of communication applications, after the web based messaging application 201 having registered (51), this web based messaging application 201 can directly query (52) the communication register server 303 and retrieve communication messages for displaying (53) the communication message to the second user 200. To work efficiently, the web based messaging application 201 can page via communication messages, retrieving a number of communication messages, corresponding to its display size, and retrieving additional communication messages, if the second user 200 requests to see older communication messages. Web based messaging application 201 does not need to update the delivery status of communication message, as it will always retrieve the communication messages on demand from the communication register server 303.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

## Claims

1. A method for messaging delivering, the method comprising:
a) sending, by a first user (100) via a computing device, at least one communication message, via a messaging delivery service (300) of a communication network, to a second user (200);
b) requesting, by the messaging delivery service (300) to a network register server (302), which messaging computing applications (201, 202, 203) the second user (200) has registered on the network register server (302);
c) recording, by the messaging delivery service (300), the communication message into a communication register server (303); and
d) for each of said registered messaging computing applications (201, 202, 203) performing, by the messaging delivery service (300), the following steps:
d1) attempting to deliver, via an access gateway (301), the communication message to the registered messaging computing application; and
d2) updating a delivery status of the communication message in the communication register server (303) concerning the registered messaging computing application, the delivery status indicating either a successful delivery or a failed delivery of the communication message in the registered messaging computing application,
the method further comprising upon the second user (200) having attached to the communication network via one of the registered messaging computing applications (201, 202, 203),
e) if the registered messaging computing application attaching to the communication network being a messaging computing application (202, 203) comprising computing capabilities supporting a local copy of delivered messages:
e1) retrieving, by the messaging delivery service (300) from the communication register server (303), the communication message having a failed delivery status for said registered messaging computing application (202, 203);
e2) re-attempting to deliver the communication message to said registered messaging computing application (202, 203), the re-attempting delivery step being performed, by the messaging delivery service (300), via the sending of the communication message to said registered messaging computing application (202, 203), and
e3) updating, by the messaging delivery service (300), the delivery status of the communication message in the communication register server (303) for said registered messaging computing application (202, 203); or
f) if the registered messaging computing application attaching to the communication network being a messaging computing application (201) without computing capabilities supporting a local copy of delivered messages:
f1) retrieving, by the messaging delivery service (300) from the communication register server (303), at least the communication message having a failed delivery status, the retrieving being performed upon the registered messaging computing application (201) having requested the messaging delivery service (300) the retrieval thereof; and
f2) delivering, by the messaging delivery service (300), the requested communication message to the registered messaging computing application (201) for presentation of the communication message to the second user (200) on said registered messaging computing application (201).

2. The method of claim 1, wherein the communication message at least comprises a short message, SMS, or an Instant Messaging, IM.

3. The method of claim 2, wherein the communication message being sent by the first user (100) in one piece or fragmented into several portions.

4. The method of claim 2 or 3, wherein the communication message being sent in said step e2) in one piece or fragmented into several portions.

5. The method of claim 1, wherein a time over which the messaging delivery service (300) re-attempts the delivery of the communication message in said step e2) being limited to a configurable time interval.

6. The method of claim 1, wherein:
the communication message being recorded in step c) in the communication register server (303) with a first identifier that identifies the communication message for each registered messaging computing application (201, 202, 203), each registered messaging computing application (201, 202, 203) also being identified in the communication register server (303) by means of a second identifier; and
the communication message being attempted to be delivered in step d1) including said first and said second identifiers.

7. A system for messaging forwarding, comprising:
- a first user (100) having a computing device for sending at least one communication message, via a messaging delivery service (300) of a communication network, to a second user (200);
- the second user (200) having one or more computing devices, each one with at least one messaging computing application (201, 202, 203), said messaging computing applications (201, 202, 203) being registered on a network register server (302);
- the messaging delivery service (300); and
- a communication register server (303),
wherein the messaging delivery service (300) comprises means adapted and configured for:
• requesting to the network register server (302) which messaging computing applications (201, 202, 203) the second user (200) has registered therein;
• for each of said registered messaging computing applications (201, 202, 203):
- recording the communication message into the communication register server (303),
- attempting to deliver, via an access gateway (301), the communication message to the registered messaging computing application, and
- updating a delivery status of the communication message in the communication register server (303) concerning the registered messaging computing application, the delivery status indicating either a successful delivery or a failed delivery of the communication message in the registered messaging computing application; and
• upon the second user (200) having attached to the communication network via one of the registered messaging computing applications (201, 202, 203):
- if the registered messaging computing application attaching to the communication network being a messaging computing application (202, 203) comprising computing capabilities supporting a local copy of delivered messages:
o retrieving, from the communication register server (303), the communication message having a failed delivery status for the registered messaging computing application (202, 203),
o re-attempting to deliver the communication message to the registered messaging computing application (202, 203), and
o updating the delivery status of the communication message in the communication register server (303) for the registered messaging computing application (202, 203); or
- if the registered messaging computing application attaching to the communication network being a messaging computing application (201) without computing capabilities supporting a local copy of delivered messages:
o retrieving, from the communication register server (303), at least the communication message having a failed delivery status, the retrieving being performed upon the registered messaging computing application (201) having requested the messaging delivery service (300) the retrieval thereof; and
o delivering the requested communication message to the registered messaging computing application (201) for presentation of the communication message to the second user (200) on said registered messaging computing application (201).

8. The system of claim 7, wherein the communication message at least comprises a short message, SMS, or an Instant Messaging, IM.

9. A computer program product comprising code instructions that when executed on a computer system implement all the steps of the method of claim 1.
